# EUROPÄISCHE PATENTSCHRIFT

(11) **EP 1 384 398 B1**
(45) Veröffentlichungstag und Bekanntmachung des Hinweises auf die Patenterteilung: **15.08.2007**
(21) Anmeldenummer: 03011384.9
(22) Anmeldetag: 20.05.2003
(51) Int. Cl.: A01D 75/18, A01D 57/20

(54) **Verfahren und Vorrichtung zur Erzeugung von qualitativ hochwertigem Futter**
Method and device for producing high-quality forage
Procédé et dispositif pour la production de fourrage qualitativement supérieur

(30) Priorität: 26.07.2002 DE 10234302
(43) Veröffentlichungstag der Anmeldung: 28.01.2004
(73) Patentinhaber: CLAAS Saulgau GmbH, 88348 Bad Saulgau (DE)
(72) Erfinder: Prenzler, Jürgen, 88377 Oberwaldhausen (DE)

(56) Entgegenhaltungen:
- EP-A- 0 934 690
- DE-A- 2 223 384
- DE-A- 3 332 578
- DE-A- 19 645 629
- FR-A- 2 792 163
- GB-A- 1 602 475
- US-A- 4 720 962
- US-A- 6 164 051

## Beschreibung

Die Erfindung betrifft ein Verfahren zur Erzeugung von qualitativ hochwertigem aus Grünfutter erzeugtem Erntegut als Futtermasse und einer Erntemaschine gemäss dem Oberbegriff der Ansprüche 1 und 2.

Der wachsende Wettbewerbsdruck auf dem Agrarsektor der Grünfutterernte verlangt nicht nur ständig nach leistungsfähigere Maschinen mit größeren Arbeitsbreiten und höherem Massendurchsatz, sonder auch nach einer stetigen Verbesserung der Qualität der erzeugten Futtermasse.

Dabei ist der Reinheitsgrad der erzeugten Futtermasse mit von ausschlaggebender Bedeutung für die Futterqualität. Fremdkörper in der Futtermasse können beispielsweise Tierkadaver von verendetem Wild sein oder auch Metallstücke von Drahtumzäunungen, oder abgebrochenen Messerklingen, Federzinken und dergleichen.

Tierkadaver sind dabei von besonders tückischer Bedeutung, da sie bei der Silage zu anaeroben Vergärungsprozessen führen, die große Anteile des Futters gänzlich unbrauchbar machen können. Metallstücke stellen dabei ebenfalls eine erhebliches und kostenträchtiges Gefährdungspotential für den Verdauungstrakt von Tieren dar.

In der DE 22 23 384 ist eine Schutzvorrichtung zur Erkennung von Fremdkörpern bei einer fahrbaren Landmaschine offenbart. Dort ist eine Schutzvorrichtung für eine fahrbare Landmaschine mit Mähbalken und Quetschwalzen beschrieben, deren Aufgabe darin besteht, Beschädigungen der Maschine durch im Eingangsweg des Ernteguts befindliche Fremdkörper auch ohne die Aufmerksamkeit des Maschinenführers automatisch und sicher zu vermeiden.

Die Aufgabe der Erfindung hingegen ist es, im späteren Verlauf der Futterbergung ein Verfahren und eine Vorrichtung zu schaffen, die geeignet sind, im Grünfutterstrom erkannte Fremdstoffe durch Absonderung kenntlich zu machen, damit derartige Fremdstoffe aus der Futtermasse entfernt werden können.

Gelöst wird die Aufgabe der Erfindung mit den kennzeichnenden Merkmalen der unabhängigen Ansprüche. Weitere vorteilhafte Ausgestaltungen der Erfindung sind den abhängigen Ansprüchen, der Beschreibung und den Figurendarstellungen zu entnehmen.

Die Erfindung sieht dabei vor, Kreiselschwader oder Mähwerke in Verbindung mit einer dem eigentlichen Mäh- oder Rechprozess nachgeschalteten

Fördereinrichtung mit einer Detektionsstrecke zur Fremdkörpererkennung auszustatten, wobei die Fördereinrichtung mittels eines geeigneten Stellorgans in die Lage versetzt wird, im Falle der Fremdkörpererkennung durch eine Steuereinrichtung den Teil des Gutstroms, in dem der Fremdkörper vermutet wird, abzusondern und ihn somit kenntlich zu machen.

Beispielsweise sind Großschwader als Kreiselschwader bekannt, die mittels einer pick up als Aufnahmeeinrichtung den zusammengerechten Schwad aufnehmen und diesen an eine Fördereinrichtung, ausgebildet als Förderband, übergeben. Dieses dient beispielsweise dazu, zwei Schwaden zu einem noch größeren Schwad zusammenzulegen.

In der noch nicht veröffentlichen DE 101 51 571.1 ist ein Mähwerk mit einer ebenfalls nachgeschalteten Fördereinrichtung beschrieben, wobei diese Fördereinrichtung ebenfalls als Förderband ausgelegt ist mit dem Ziel der Zusammenlegung von Einzelschwaden zu einem Großschwad.

Derartige Querfördereinrichtungen können in besonders vorteilhafter Weise nach der Erfindung in Verbindung mit einer entsprechenden Sensorik als Detektionsstrecke zur Fremdkörpererkennung und mit einer entsprechenden Auswerteinheit und der erforderlichen Steuerungseinrichtung Fremdkörper als solche erkennen und aus dem Gutstrom absondern und somit kenntlich machen

Prinzipiell stehen aber auch andere Möglichkeiten der Gutstromförderung im vorgenannten Sinne zur Verfügung. Beispielsweise können Gutströme in diesesm Sinne auch über Schüttelrinnen, Trogförderer, Scheckenförderer usw. hinweg geführt und gefördert werden.

Erfindungswesentlich ist dabei ausschließlich die Kombination einer dem eigentlichen Bearbeitungsprozess nachgeschalteten Fördereinrichtung mit einer Detektionsstrecke, deren Aufgabe es ist, den Tei des Gutstroms ausfindig zu machen, in dem der Fremdkörper vermutet wird, und die dabei ein Ausgangssignal erzeugt, welches einer Steuerung als Eingangssignal dient, um damit über geeignete Mittel einen Stellvorgang auszulösen, der den Teil des fremdkörperbehaftenden Gutstroms vom fremdkörperfreien Gutstrom absondert. Dabei kann die Effizienz einer derartigen Detektionsstrecke durch den Einsatz von Mikroprozessoren erheblich verbessert werden.

Dieser Vorteil kommt insbesondere dann zum Tragen und wird somit in besonderer Weise verdeutlicht, wenn mehrere Detektoren nach verschiedenen physikalischen Messprinzipien arbeitend, entlang einer Detektionsstrecke angeordnet sind.

Das Zusammentreffen verschiedener Eingangssignale an den Eingängen eines Mikroprozessors, generiert aus verschiedenartigen Messgrößen mit Hilfe unterschiedlicher Detektoren, kann dabei die Aussagewahrscheinlichkeit darüber, dass es sich tatsächlich um im Gutstrom befindliche Fremdkörper handelt, wesentlich erhöhen wodurch der Separationsprozess beschleunigt und sicherer gestaltet werden kann.

Zur Bildung unterschiedlicher Messgrößen können prinzipiell alle bekannten Messgrößenarten, wie beispielsweise geometrische oder Stoffmessgrößen, kinematische, mechanische, strömungstechnische, thermische, optische, elektrische, Messgrößen oder auch beispielsweise Strahlungs- akustische oder Klimamessgrößen heran gezogen werden.

Die gleichzeitige Auswertung verschiedenartiger Eingangssignale unter Berücksichtigung deren Pegelstärken durch einen Mikroprozessor kann dabei wiederum die Aussagewahrscheinlichkeit, das es sich tatsächlich um einen Fremdkörper im Gutstrom handelt, erhöhen, wobei ein Eingangssignal für sich allein genommen möglicherweise noch keine Anlass bieten würde, eine Stellvorgang im Sinne des Absonderns auszulösen.

Ein Mikroprozessor als Teil einer Auswerteeinheit der Detektionsstrecke kann ein Ausgangssignal oder auch mehrere Ausgangssignale erzeugen, die nun über geeignete Aktoren zur Betätigung von Stelleinrichtungen auf den Gutstrom einwirken. Derartige Aktoren können beispielsweise elektromagnetisch betätigte hydraulische oder pneumatische Steuerventile oder Steuerrelais oder Schaltschütze sein, die ihrerseits wiederum Stelleinrichtungen, wie beispielsweise Druckmittelzylinder oder Motore betätigen

Beispielsweise kann der Verlauf eines Gutstroms wenn ein Fremdkörper wie beispielsweise ein verendeten Stück Wild (Tierkadaver) darin vermutet wird, verändert werden, indem eine Weiche so gesetzt wird, das der Gutstrom außerhalb der Fläche des normal gebildeten Schwads abgelegt wird.

Alternativ kann beispielsweise auch die Bandgeschwindigkeit kurzfristig derartig verändert werden, so das sich eine veränderte Wurfparabel für den Gutstrom beim verlassen der Fördereinrichtung einstellt, wodurch der besagte Fremdkörper außerhalb der Fläche der normalen Schwadbreite abgelegt wird.

Andererseits kann eine derartige erfinderische Ausgestaltung eine Fördereinrichtung, unterstützt durch eine Detektionsstrecke zur Erkennung und Absonderung von Fremdkörpern, in besonders vereinfachter Form auch ohne den Einsatz von Mikroprozessoren verwirklicht werden. Beispielsweise kann eine Fördereinrichtung mit einem kapazitiven Näherungssensor ausgestattet sein, der auf größere Festkörperanteile hinreichend reagiert, wobei der Näherungssensor bei Überschreitung eines Schwellwerts seines Signalpegels ein Ausgangssignal erzeugt, welches einen Aktor direkt, d.h. ohne Zwischenschaltung eines Mikroprozessors, betätigt. Ein derartiges Signal könnte beispielsweise ein Zeitglied als Relais zur Betätigung eines Elektromagneten betätigen, wodurch beispielsweise ein Hydraulikventil betätigt wird. Dabei kann das Hydraulikventil für die von dem Zeitglied vorgegebenen Dauer in diesem Schaltzustand verweilen und in dieser Verweilzeit ein Stellorgan betätigen.

Kennzeichnend für die Erfindung ist somit auch, das der eigentliche Produktionsprozess beim Erkennen eines Fremdkörpers im Gutstrom und dessen Absonderung nicht durch Stillstand oder Reversierung von Antrieben, das heißt nicht durch Unterbrechung des eigentlichen Produktionsprozesses gestoppt werden muss.

Bevorzugte Anwendungsgebiete der Erfindung sind Kreiselschwader wobei aber auch an Kreiselmähwerken mit nachgeschalteten Fördereinrichtungen die Vorteile der Erfindung durchaus Anwendung finden können.

Anhand des nachfolgend dargelegten Ausführungsbeispiels soll die Erfindung im einzelnen am Beispiel eines Kreiselschwaders näher dargelegt und erläutert werden:
- Fig. 1: zeigt eine Anwendung der Erfindung dargestellt am Beispiel eines 4-Kreiselschwaders mit einer Querfördereinrichtung und einer vereinfacht dargestellten Detektionsstrecke

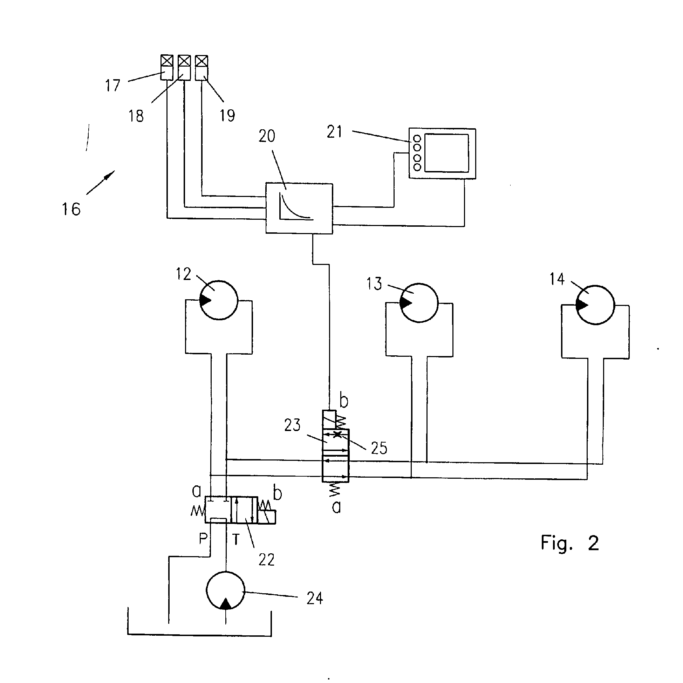

- Fig. 2: zeigt einen vergrößerten Ausschnitt des Hydraulikschaltplans gemäß Fig.1
- Fig. 3: zeigt eine Anwendung der Erfindung dargestellt am Beispiel eines 4-Kreiselschwaders mit einer Querfördereinrichtung und einer vereinfacht dargestellten Detektionsstrecke gesteuert von einem Proportional-Wegeventiel

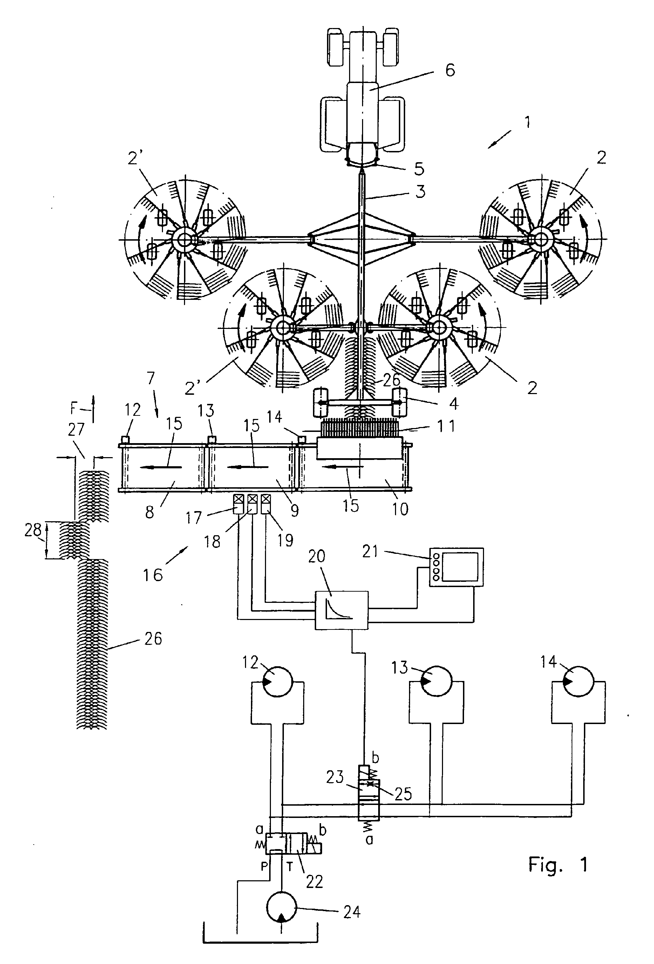

In Fig.1 ist ein Kreiselschwader 1 mit einer Detektionsstrecke (16) nach der Erfindung in einer Draufsicht dargestellt. Bei dem Kreiselschwaders 1 selbst handelt sich dabei um eine prinzipiell bekannte Ausführung eines 4-Kreiselschwaders, ausgebildet als Mittelschwader mit vier Schwadkreiseln 2,2' und mit einer am Ende angeordneten Fördereinrichtung (7) zur seitlichen Schwadablage.

Dabei ist der Kreiselschwader 1 mittels einer Kupplungseinrichtung 5 mit einem Traktor 6 verbunden dargestellt. Die Drehrichtungen der Schwadkreisel sind jeweils durch einen Drehrichtungspfeil gekennzeichnet. Dabei sind die Schwadkreisel in bekannter Weise mittel Stütz- und Tasträdern am Boden und mit seitlichen Auslegern am Maschinegestell 3 geführt, wobei die Schwadkreisel 2.2' um fahrtrichtungsparallele Achsen in eine Transportstellung verschwenkt werden können. Das Maschinegestell 3 wird heckseitig von einem Fahrgestell 4 gegenüber dem Boden abgestützt.

Die Fördereinrichtung 7 befindet sich hinter dem Fahrwerk 4 und es besteht aus drei in Reihe angeordneten Förderbändern 8,9,10, die aus Transportgründen zusammenklappbar sind und denen eine Pick-up (11) als Aufnahmeeinrichtung vorgelagert ist. Mit der Pick-up (11) kann ein Schwad 26 vom Boden aufgenommen und auf die Fördereinrichtung weiter gefördert werden. Das Erntegut wird über die Förderbänder 8,9,10 mit der Fördergeschwindigkeit 15 quer zur Fahrtrichtung F seitlich in einem Schwad 26 abgelegt. Jedes Förderband 8,9,10 verfügt über seinen eigenen Antriebsmotor 12,13,14, wobei diese Antriebsmotore 12,13,14 in bekannter Weise die Förderbänder umschlingenden Antriebstrommeln antreiben.

Des Weiteren ist die Fördereinrichtung (7) mit einer symbolisch dargestellten

Detektionsstrecke 16 nach der Erfindung ausgestattet. Dabei besteht die Detektionsstrecke 16 beispielsweise aus drei nebeneinander angeordneten Detektoren 17,18,19. die mit einer Auswerteeinheit 20 verbunden sind. Eine derartige Auswerteeinheit 20 kann beispielsweise mikroprozessorunterstützt sein und mit einer Anzeigeinheit- und Bedieneinheit 21 in der Fahrerkabine gekoppelt sein. Die Detektoren 17,18,19 sind dabei so auf der Fördereinrichtung 7 angebracht, dass sie den Gutstrom des Erntegutes detektieren und Fremdkörper, die sich im Gutstrom befinden als solche erkennen können. Derartige Detektoren 17,18,19 können beispielsweise auf die Veränderung von magnetischen oder kapazitiven Feldgrößen, oder auf veränderte Infrarotspektren oder auch auf der Basis von Laserlichtreflektion nach dem Dopplereffekt reagieren. Gemeinsam ist diesen Detektoren, das sie einen Hinweis liefern, der eine erhöhte Wahrscheinlichkeit derart signalisiert, dass der Gutstrom einen Fremdkörper mit sich führt. Dabei kann durch die Mehrfacherfassung und derer gleichzeitige Auswertung von eben auf verschieden Messprinzipien basierenden Detektionssignalen die Aussagewahrscheinlichkeit, das sich ein Fremdkörper innerhalb des Gutstroms befindet, erhöht werden.

Die Detektionsstrecke 16 ist in Verbindung mit einem korrespondieren aber erheblich vereinfachten Hydraulikschaltplan so dargestellt, dass die Wirkungsweise der Detektionsstrecke 16 auf den Prozessverlauf des Aussonderungsprozesses daraus ersichtlich wird. Dabei wird das Hydrauliksystem von einer Hydropumpe 24 als Konstantpumpe mit Drucköl versorgt. Das Wegeventil 22 ermöglicht dabei eine grundsätzliche Zu- oder Abschaltung der Antriebsmotore 12,13,14 der Förderbänder 8,9,10 der Fördereinrichtung 7. In der nichtbetätigten Grundstellung (a) des Ventilschiebers des elektromagnetischen Ventils 23 werden alle drei Antriebsmotore 12,13,14 mit der gleichen, d.h. mit je einem Drittel der von der Hydropumpe 24 geförderten Ölmenge beaufschlagt, so dass alle drei Antriebsmotore 12,13,14, ausgebildet als Hydromotore mit der gleichen Drehzahl arbeiten, Unterstellt ist, das alle drei Antriebstrommeln der Förderbänder 8,9,10 den gleichen Durchmesser besitzen, so das dann alle drei Förderbänder 8,9,10 die gleiche Förderbandgeschwindigkeit 15 aufweisen.

Ist das Ausgangssignal der Auswerteeinheit 20 high gesetzt, was gleichbedeutend ist mit "Fremdkörper im Gutstrom" vorhanden, wird ein Aktor, im dargestellten Ausführungsbeispiel das elektromagnetisches Ventil 23, derart angesteuert, dass dieses nun unmittelbar in die Schaltstellung (b) des Steuerschiebers dieses Ventils überführt wird. Dieses hat zur Folge, das der Ölstrom, der die Hydraulikmotore 13 und 14 beaufschlagt, momentan rückflussseitig durch die Drossel 25 angedrosselt wird, woraufhin der in seinem Volumenstrom reduzierte Anteil des Drucköls für die Hydraulikmotore 13 und 14 nunmehr unmittelbar und sofort dem Hydraulikmotor 12 des Förderbandes 8 zugute kommt. Die Folge ist ein etwa sprunghaftrer Anstieg der Antriebsdrehzahl des Hydraulikmotors 12, wodurch auch die Antriebstrommel des Förderbandes 8 in seiner Drehzahl entsprechend erhöht wird und ein gleichzeitiges Absenken der Drehzahl der beiden Antriebsmotore 13 und14.

Dadurch wird gleichermaßen der über das Förderband 8 hinweggeführte Förderstrom entsprechend beschleunigt und einer größeren Wurfparabel folgend über die normale Ablagefläche hinausgehend mit dem Schwadversatz 27 abgelegt.

Dabei wird die Zeitdauer dieses Vorgangs begrenzt, beispielsweise durch eine Vorgabezeit, die in der Auswerteinheit 21 in Verbindung mit eines Mikroprozessor programmatisch hinterlegt ist, so dass sich längs des Fahrweges eine Strecke mit der Schwadversatzlänge 28 einstellt. Anschließend geht die Schwadbildung des Kreiselschwader wieder in den Normalbetrieb über. Dabei kann die Auswerteeinheit so programmiert sein, dass die Stärke eines Detektionssignals eine Rückschluss auf die Größe oder Art eines Fremdkörpers zuläst, so das der Fahrer des Traktors beispielsweise über ein akustisches Signal darauf hingewiesen wird, das sich hier ein größerer oder bestimmter Fremdkörper, beispielsweise der eines Tierkadavers im Gutstrom befindet. Dieses kann ihn dazu veranlassen. die Fahrt zu unterbrechen, und nach dem Fremdkörper Ausschau zu halten um diesen an den Feldrand zu verbringen um ihn damit dem weitern Ernte-Bergungsprozess sicher zu entziehen.

Ebenso ist es möglich, den zuvor angesprochenen Beschleunigungsprozess negativ zu gestalten, so dass in diesem Fall die Wurfparabel geringer ausfällt, welches aber ebenfalls einen Schwadversatz 27 erzeugt.

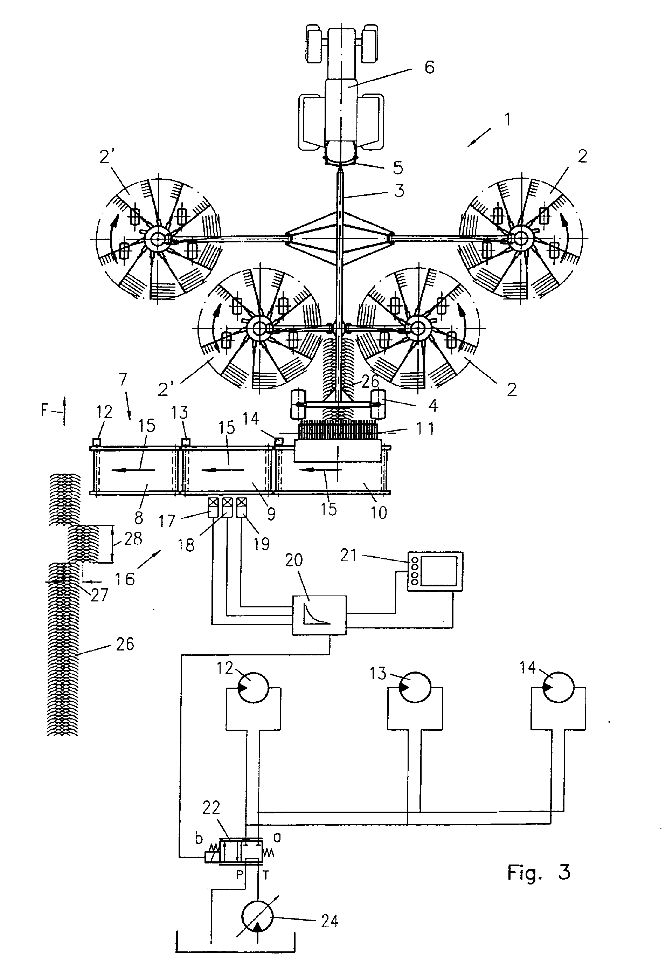

Ein derartiges Ausführungsbeispiel ist in Fig. 3 dargestellt. Dabei stellt das Wegeventil 22 ein Proportional dar, so das damit im fall des Eintreffens des Ereignisses "Fremdkörper im Gutstrom" der Förderstrom des Hydrauliköls für alle Antriebsmotore 12,13,14 gedrosselt werden kann, so das die Förderbandgeschwindigkeit 15 aller Förderbänder 8,9,10 abgesenkt wird, wodurch die Wurfparabel entsprechend kleiner wird. Dadurch wird der Teil des fremdkörperbeinhaltenden Gutstroms nunmehr an der der Fördereinrichtung 5 zugewandten Seite des Schwads 26 mit dem Schwadversatz 27 abgelegt.

Alternativ ist es auch möglich, das sich am Ende der Fördereinrichtung eine Weiche oder ein Überleitorgan befindet, welche vorübergehend für eine gewisse Zeitdauer, ausgelöst durch das high-Signal einer Detektionsstrecke 16, und von einem Stellorgan, beispielsweise einem druckbeaufschlagten Druckmittelzylinder betätigt, so gestellt wird, die ebenfalls einen Schwadversatz 27 erzeugt.

Mir der dargelegten Erfindung ist es somit möglich, verfahrenstechnisch bedingt, unter Einsatz einer Detektionsstrecke 16 mit den dazugehörigen Detektoren 17,18,19, den Antriebs- und Stellorganen 12,13,14, im laufenden Arbeitsprozess Fremdkörper innerhalb des Gutstroms zu erkennen, und aus der normalen Gutablage eines Schwads auszusondern bzw. zu markieren. Diese liefert einen Hinweis, an welchen Stellen ein Fremdkörper zu vermuten ist. Dieses Stellen können dann zumindest gezielt auf Fremdkörper untersucht werden und insbesondere können dabei beispielsweise Tierkadaver aufgespürt und aus der Grünfuttermasse entfernt werden.

Die Erfindung kann sinngemäß auch auf ähnliche Erntemaschinen, beispielsweise auch auf Mähwerke angewandt werden, sofern diese über eine nachgeschaltete Fördereinrichtung, die einen Querversatz des Gutstroms zur Erzeugung eines Schwads, verfügen.

### Bezugszeichenliste

- 1: Kreiselschwader
- 2,2': Schwadkreisel
- 3: Maschinengestell
- 4: Fahrwerk
- 5: Kupplungseinrichtung
- 6: Traktor
- 7: Fördereinrichtung
- 8: Förderband
- 9: Förderband
- 10: Förderband
- 11: pick up - Aufnahmeeinrichtung
- 12: Antriebsmotor
- 13: Antriebsmotor
- 14: Antriebsmotor
- 15: Förderbandgeschwindigkeit
- 16: Detektionsstrecke
- 17: Detektor
- 18: Detektor
- 19: Detektor
- 20: Auswerteeinheit
- 21: Anzeige- und Bedieneinheit
- 22: Wegeventil
- 23: Wegeventil
- 24: Hydropumpe
- 25: Drossel
- 26: Schwad
- 27: Schwadversatz
- 28: Schwadversatzlänge

## Patentansprüche

1. Verfahren zur Herstellung von qualitativ hochwertiger Futtermasse aus Grünfutter mit einer Erntemaschine, insbesondere ausgebildet als Kreiselschwader oder Kreiselmähwerk, in Verbindung mit einer nachgeschalteten Fördereinrichtung (7) zum Ablegen und/oder Querversetzen eines Schwads (20), **dadurch gekennzeichnet, dass** die Fördereinrichtung (7) eine Detektionsstrecke (16) zum Aufspüren von Fremdkörpern aufweist, die dazu dient, Fremdkörper im laufenden Arbeitsprozess ohne Unterbrechung desselben vom Gutstrom abzusondern.

2. Erntemaschine, insbesondere ausgebildet als Kreiselschwader oder Kreiselmähwerk, in Verbindung mit einer nachgeschalteten Fördereinrichtung zum Querversetzen und Ablegen eines Schwads, **dadurch gekennzeichnet, dass** die Fördereinrichtung (7) eine Detektionsstrecke (16) mit Detektoren (17,18,19) zum Aufspüren von Fremdkörpern aufweist.

3. Erntemaschine nach Anspruch (2), **dadurch gekennzeichnet, dass** wenigstens ein Detektor (17,18,19) der Detektionsstrecke (16) in Wirkverbindung mit wenigstens einem Aktor (23) derart steht, dass dieser (23) auf die Absonderung von Fremdkörpern aus dem Gutstrom einwirkt.

4. Erntemaschine nach Anspruch (2), **dadurch gekennzeichnet, dass** der wenigstens eine Aktor (23) auf ein Stellorgan zur Absonderung von Fremdkörpern aus dem Gutstrom einwirkt.

5. Erntemaschine nach Anspruch (2) und (3), **dadurch gekennzeichnet, dass** die Detektionsstrecke (16) mit wenigstens einer mikroprozessorgestützten Auswerteeinheit (20) derart in Wirkverbindung steht, dass diese auf die Absonderung von Fremdkörpern aus dem Gutstrom einwirkt.

6. Erntemaschine nach Anspruch (2) und (3), **dadurch gekennzeichnet, dass** die Detektionsstrecke (16) wenigstens einer Anzeige- und Bedieneinheit (21) aufweist.

7. Erntemaschine nach einem oder mehreren der vorhergehenden Ansprüche, **dadurch gekennzeichnet, dass** die Fördereinrichtung (7) aus wenigstens einem Förderband (10) besteht.

8. Erntemaschine nach einem oder mehreren der vorhergehenden Ansprüche, **dadurch gekennzeichnet, dass** die Fördereinrichtung (7) aus mehreren hintereinander geschalteten Förderbändern (8,9,10) besteht.

9. Erntemaschine nach einem oder mehreren der vorhergehenden Ansprüche, **dadurch gekennzeichnet, dass** die Absonderung von Fremdkörpern durch einen vorübergehenden Schwadversatz (27) herbeigeführt wird.

10. Erntemaschine nach einem oder mehreren der vorhergehenden Ansprüche, **dadurch gekennzeichnet, dass** die Absonderung von Fremdkörpern durch einen Schwadversatz (27) herbeigeführt wird.

11. Erntemaschine nach einem oder mehreren der vorhergehenden Ansprüche, **dadurch gekennzeichnet, dass** der Schwadversatz (27) durch Veränderung der Wurfweite des die Fördereinrichtung (7) verlassenden Gutstroms erzeugt wird.

12. Erntemaschine nach einem oder mehreren der vorhergehenden Ansprüche, **dadurch gekennzeichnet, dass** die Veränderung der Wurfweite durch Beschleunigungsvorgänge innerhalb der Fördereinrichtung erzeugt wird.

13. Erntemaschine nach einem oder mehreren der vorhergehenden Ansprüche, **dadurch gekennzeichnet, dass** der Beschleunigungsvorgang durch eine Veränderung mindestens einer Förderbandgeschwindigkeit (15) erzeugt wird.

14. Erntemaschine nach einem oder mehreren der vorhergehenden Ansprüche, **dadurch gekennzeichnet, dass** der Beschleunigungsvorgang durch einen hydrostatischen Förderbandantrieb (12,13,14) erzeugt wird.

15. Erntemaschine nach einem oder mehreren der vorhergehenden Ansprüche, **dadurch gekennzeichnet, dass d**er Schwadversatz (27) durch ein Überleit- oder Umleitorgan am äußeren Ende der Fördereinrichtung (7) erzeugt wird.

16. Erntemaschine nach Anspruch 15, **dadurch gekennzeichnet, dass** das Überleit- oder Umleitorgan aus einer gesteuerten Weiche besteht.

17. Erntemaschine nach der vorhergehenden Ansprüche 15 oder 16, **dadurch gekennzeichnet, dass** das Betätigungselement des Überleit- oder Umleitorgan aus einem druckmittelbeaufschlagten Druckzylinder besteht.

18. Erntemaschine nach einem oder mehreren der vorhergehenden Ansprüche, **dadurch gekennzeichnet, dass** die Fördereinrichtung (7) aus einer Schüttelrinne besteht.

19. Erntemaschine nach einem oder mehreren der vorhergehenden Ansprüche, **dadurch gekennzeichnet, dass** die Fördereinrichtung (7) aus einem Trogförderer besteht.

20. Erntemaschine nach einem oder mehreren der vorhergehenden Ansprüche, **dadurch gekennzeichnet, dass** die Fördereinrichtung (7) aus einem Trogförderer in Verbindung mit einer Förderschnecke besteht.

21. Erntemaschine nach einem oder mehreren der Ansprüche 2 bis 19, **dadurch gekennzeichnet, dass** die Fördereinrichtung (7) eine Detektionsstrecke (16) zum Aufspüren von Fremdkörpern aufweist die es ermöglicht, Fremdkörper im laufenden Arbeitsprozess ohne Unterbrechung desselben vom Gutstrom abzusondern.

## Claims

1. A process for the production of high-quality fodder material from roughage with a harvester, in particular in the form of a rotary swather or rotary cutting mechanism, in conjunction with a conveyor device (7) arranged downstream thereof for depositing and/or transversely displacing a swathe (20), **characterised in that** the conveyor device (7) has a detection section (16) for tracking down foreign bodies, which serves to separate off foreign bodies from the flow of material in the ongoing working process without interrupting same.

2. A harvester, in particular in the form of a rotary swather or rotary cutting mechanism, in conjunction with a conveyor device arranged downstream thereof for transversely displacing and depositing a swathe, **characterised in that** the conveyor device (7) has a detection section (16) with detectors (17, 18, 19) for tracking down foreign bodies.

3. A harvester according to claim 2 **characterised in that** at least one detector (17, 18, 19) of the detection section (16) is operatively connected to at least one actuator (23) in such a way that the actuator (23) acts on separation of foreign bodies out of the flow of material.

4. A harvester according to claim 2 **characterised in that** the at least one actuator (23) acts on a control member for separating off foreign bodies from the flow of material.

5. A harvester according to claim 2 and claim 3 **characterised in that** the detector section (16) is operatively connected to at least one microprocessor-supported evaluation unit (20) in such a way that it acts on separation of foreign bodies out of the flow of material.

6. A harvester according to claim 2 and claim 3 **characterised in that** the detection section (16) has at least one display and operating unit (21).

7. A harvester according to one or more of the preceding claims **characterised in that** the conveyor device (7) comprises at least one conveyor belt (10).

8. A harvester according to one or more of the preceding claims **characterised in that** the conveyor device (7) comprises a plurality of successively connected conveyor belts (8, 9, 10).

9. A harvester according to one or more of the preceding claims **characterised in that** foreign bodies are separated off by temporary swathe displacement (27).

10. A harvester according to one or more of the preceding claims **characterised in that** foreign bodies are separated off by swathe displacement (27).

11. A harvester according to one or more of the preceding claims **characterised in that** the swathe displacement (27) is produced by varying the throwing distance of the flow of material leaving the conveyor device (7).

12. A harvester according to one or more of the preceding claims **characterised in that** the variation in the throwing distance is produced by acceleration procedures within the conveyor device.

13. A harvester according to one or more of the preceding claims **characterised in that** the acceleration procedure is produced by a variation at least in a conveyor belt speed (15).

14. A harvester according to one or more of the preceding claims **characterised in that** the acceleration procedure is produced by a hydrostatic conveyor belt drive (12, 13, 14).

15. A harvester according to one or more of the preceding claims **characterised in that** the swathe displacement (27) is produced by a pass-over or circumvention member at the outer end of the conveyor device (7).

16. A harvester according to claim 15 **characterised in that** the pass-over or circumvention member comprises a controlled switching means.

17. A harvester according to preceding claims 15 or 16 **characterised in that** the actuating element of the pass-over or circumvention member comprises a pressure fluid-actuated pressure cylinder.

18. A harvester according to one or more of the preceding claims **characterised in that** the conveyor device (7) comprises a shaker channel.

19. A harvester according to one or more of the preceding claims **characterised in that** the conveyor device (7) comprises a trough conveyor.

20. A harvester according to one or more of the preceding claims **characterised in that** the conveyor device (7) comprises a trough conveyor in conjunction with a conveyor screw.

21. A harvester according to one or more of claims 2 to 19 **characterised in that** the conveyor device (7) has a detection section (16) for tracking down foreign bodies, which makes it possible to separate off foreign bodies from the flow of material in the ongoing working process without interrupting same.

## Revendications

1. Procédé de production de fourrage de qualité supérieure à partir de fourrage vert à l'aide d'une machine de récolte, notamment d'une machine agencée en giro-faneuse-andaineuse ou en giro-broyeuse, en liaison avec un dispositif de transport (7) placé en aval pour former et/ou décaler transversalement un andain (20), **caractérisé par le fait que** le dispositif de transport (7) comporte un tronçon de détection (16) pour déceler des corps étrangers, afin d'isoler lesdits corps étrangers du flux de produit récolté pendant le cycle de travail, sans interruption de celui-ci.

2. Machine de récolte, notamment machine agencée en giro-faneuse-andaineuse ou en giro-broyeuse, en liaison avec un dispositif de transport (7) placé en aval pour décaler transversalement et/ou former un andain (20), **caractérisée par le fait que** le dispositif de transport (7) comporte un tronçon de détection (16) avec des détecteurs (17, 18, 19) pour déceler des corps étrangers.

3. Machine de récolte selon la revendication 2, **caractérisée par le fait qu'**au moins un détecteur (17, 18, 19) du tronçon de détection (16) est lié fonctionnellement à au moins un élément actif (23), d'une manière telle que celui-ci (23) commande la séparation des corps étrangers d'avec le flux de produit récolté.

4. Machine de récolte selon la revendication 2, **caractérisée par le fait que** l'élément actif (23) au nombre d'au moins un commande un organe de réglage pour la séparation des corps étrangers d'avec le flux de produit récolté.

5. Machine de récolte selon les revendications 2 et 3, **caractérisée par le fait que** le tronçon de détection (16) coopère avec au moins une unité de traitement (20) à microprocesseur d'une manière telle que celle-ci (23) commande la séparation des corps étrangers d'avec le flux de produit récolté.

6. Machine de récolte selon les revendications 2 et 3, **caractérisée par le fait que** le tronçon de détection (16) comporte au moins une unité d'affichage et de commande (21).

7. Machine de récolte selon une ou plusieurs des revendications précédentes, **caractérisée par le fait que** le dispositif de transport (7) est formé d'au moins une bande transporteuse (10).

8. Machine de récolte selon une ou plusieurs des revendications précédentes, **caractérisée par le fait que** le dispositif de transport (7) est formé de plusieurs bandes transporteuses (10) disposées l'une à la suite de l'autre.

9. Machine de récolte selon une ou plusieurs des revendications précédentes, **caractérisée par le fait que** la séparation des corps étrangers est réalisée par un décalage d'andain (27) temporaire.

10. Machine de récolte selon une ou plusieurs des revendications précédentes, **caractérisée par le fait que** la séparation des corps étrangers est réalisée par un décalage d'andain (27).

11. Machine de récolte selon une ou plusieurs des revendications précédentes, **caractérisée par le fait que** le décalage d'andain (27) est produit par modification de la distance d'éjection du produit récolté quittant le dispositif de transport (7).

12. Machine de récolte selon une ou plusieurs des revendications précédentes, **caractérisée par le fait que** la modification de la distance d'éjection est obtenue par des accélérations à l'intérieur du dispositif de transport.

13. Machine de récolte selon une ou plusieurs des revendications précédentes, **caractérisée par le fait que** l'accélération est produite par une modification d'au moins une vitesse de bande transporteuse (15).

14. Machine de récolte selon une ou plusieurs des revendications précédentes, **caractérisée par le fait que** l'accélération est produite par un entraînement hydrostatique (12, 13, 14) de bande transporteuse.

15. Machine de récolte selon une ou plusieurs des revendications précédentes, **caractérisée par le fait que** le décalage d'andain (27) est produit par un organe de transfert ou de déviation à l'extrémité extérieure du dispositif de transport (7).

16. Machine de récolte selon la revendication 15, **caractérisée par le fait que** l'organe de transfert ou de déviation est formé d'un aiguillage piloté.

17. Machine de récolte selon une des revendications 15 ou 16 précédentes, **caractérisée par le fait que** l'élément d'actionnement de l'organe de transfert ou de déviation est formé d'un vérin à fluide sous pression.

18. Machine de récolte selon une ou plusieurs des revendications précédentes, **caractérisée par le fait que** le dispositif de transport (7) est formé d'une trémie vibrante.

19. Machine de récolte selon une ou plusieurs des revendications précédentes, **caractérisée par le fait que** le dispositif de transport (7) est formé d'un convoyeur à augets.

20. Machine de récolte selon une ou plusieurs des revendications précédentes, **caractérisée par le fait que** le dispositif de transport (7) est formé d'un convoyeur à augets associé à une vis d'Archimède.

21. Machine de récolte selon une ou plusieurs des revendications 2 à 19, **caractérisée par le fait que** le dispositif de transport (7) comporte un tronçon de détection (16) pour déceler des corps étrangers qui permet d'isoler des corps étrangers du flux de produit récolté pendant le cycle de travail, sans interruption de celui-ci
